# EUROPÄISCHE PATENTSCHRIFT

(11) **EP 0 601 402 B1**
(45) Veröffentlichungstag und Bekanntmachung des Hinweises auf die Patenterteilung: **14.08.1996**
(21) Anmeldenummer: 93118978.1
(22) Anmeldetag: 25.11.1993
(51) Int. Cl.: D21H 17/51

(54) **Verfahren zur Herstellung von imprägnierten Papieren für die Oberflächenbeschichtung**
Process for producing impregnated paper for superficial coating
Procédé de fabrication de papier imprégné pour le couchage en surface

(30) Priorität: 05.12.1992 DE 4240982
(43) Veröffentlichungstag der Anmeldung: 15.06.1994
(73) Patentinhaber: BASF Aktiengesellschaft, 67063 Ludwigshafen (DE)
(72) Erfinder: Kirchgaessner, Uwe, Dr., D-67227 Frankenthal (DE); Decher, Jakob, D-67240 Bobenheim-Roxheim (DE); Jaeckh, Christof, Dr., D-69120 Heidelberg (DE); Wittmann, Otto, D-67227 Frankenthal (DE); Niessner, Manfred, Dr., D-67105 Schifferstadt (DE); Guenther, Erhard, Dr., D-67063 Ludwigshafen (DE); Weiser, Juergen, Dr., D-69198 Schriesheim (DE)

(56) Entgegenhaltungen:
- EP-A- 0 012 249
- EP-A- 0 026 841

## Beschreibung

Die Erfindung betrifft ein Verfahren zur Herstellung von imprägnierten Papieren, wie sie für die Oberflächenbeschichtung verwendet werden, durch Tränken der Papiere mit einem wäßrigen Harz auf Basis von Melamin-Formaldehyd-Kondensaten.

Weiterhin betrifft die Erfindung Schichtpreßstoffe, die mit den imprägnierten Papieren hergestellt werden sowie deren Einsatz zur Oberflächenbeschichtung von Holzwerkstoffen.

Eine wichtige Eigenschaft von aus imprägnierten Papieren hergestellten Schichtpreßstoffen ist die Nachverformbarkeit. Um diese Nachverformbarkeit zu gewährleisten, müssen die zum Imprägnieren der Papiere eingesetzten Tränkharze so modifiziert werden, daß sie den Schichtpreßstoffen eine entsprechende Elastizität verleihen.

Als Tränkharze für diesen Zweck werden üblicher Weise wäßrige Kondensationsharze auf Basis von Melamin und Formaldehyd verwendet.

Aus der EP-A-106 049 ist die Verwendung von mit Hydroxyalkylmelaminen modifizierten Melamin-Formaldehyd-Harzen -Harzen zur Herstellung von Laminaten beschrieben, wobei speziell Hydroxy-propylmelamin empfohlen wird.

Aus der EP-A-166 297 ist die Verwendung von (2-Hydroxyethyl)melaminen als Modifizierungsmittel für Aminoplastharze bekannt.

In der EP-A-408 947 werden Formkörper aus Melaminharzen beschrieben, wobei bei den Melaminharzen ein Teil des Melamins durch Hydroxy-oxaalkyl-substituiertes Melamin ersetzt ist.

Weiterhin sind aus der EP-A-0523485 Kondensationsprodukte aus Melamin, Hydroxyoxaalkylmelaminen, Phenolen und Formaldehyd bekannt, die sich zur Herstellung von Schäumen und Fasern eignen.

Bisher bekannte Verfahren unter Verwendung von modifizierten Melamin-Formaldehyd-Harzen weisen aber noch einige Nachteile hinsichtlich der Elastizität beim Postforming-Prozeß auf.

Aufgabe der vorliegenden Erfindung war es, ein verbessertes Verfahren zu finden.

Demgemäß wurde ein Verfahren zur Herstellung von imprägnierten Papieren, wie sie für die Oberflächenbeschichtung eingesetzt werden, durch Tränken der Papiere mit einem wässrigen Harz auf Basis von Melamin-Formaldehyd-Kondensaten, gefunden, welches dadurch gekennzeichnet ist, daß man die Papiere mit einem wäßrigen Kondensationsharz, enthaltend 2 bis 45 Gew.-%, bezogen auf die Gesamtmenge an eingesetztem Melamin und Formaldehyd, eines Melaminderivats der allgemeinen Formel I 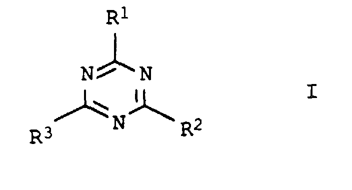 in der R¹, R² und R³ für -NH₂ oder NHR⁴ stehen und R¹, R² und R³ nicht gleichzeitig -NH₂ sind, und R4 für Hydroxy-C₂-C₄-alkyl(oxa-C₂-C₄-alkyl)ₙ- mit n = 1 bis 5 steht, oder Mischungen von Melaminderivaten I, imprägniert.

Zu den einzelnen Komponenten ist folgendes auszuführen:

Melamin wird üblicherweise in fester Form zugesetzt, kann aber auch in Form wässriger Lösungen eingesetzt werden.

Formaldehyd setzt man in der Regel als wäßrige Lösung mit einer Konzentration von 40 bis 50 Gew.-% ein. Es ist aber auch möglich, den Formaldehyd in Form fester, Formaldehyd liefernder Verbindungen einzusetzen, beispielsweise als Paraformaldehyd.

Melamin und Formaldehyd können üblicherweise in solchen Mengen eingesetzt werden, daß das Molverhältnis von Melamin zu Formaldehyd 1:1,3 bis 1:2,5, bevorzugt 1:1,5 bis 1:2,0 beträgt.

Als Melaminderivate I kommen bevorzugt solche in Betracht, bei denen in der Hydroxy-C₂-C₄-alkyl-(oxa-C₂-C₄-alkyl)ₙ-Gruppe (R⁴), n = 1 bis 3, besonders bevorzugt 1 bis 2, ist.

Besonders geeignete Melaminderivate I sind beispielsweise die (5-Hydroxy-3-oxa-pentylamino-)1,3,5-triazine wie 2-(5-Hydroxy-3-oxa-pentylamino)-1,3,5-triazin, 2,4-Di-(5-hydroxy-3-oxa-pentylamino)-1,3,5-triazin, 2,4,6-Tris-(5-hydroxy-3-oxa-pentylamino)-1,3,5-triazin oder Gemische dieser Verbindungen beispielsweise ein Gemisch aus 10 mol-% 2-(5-Hydroxy-3-oxa-pentylamino)-1,3,5-triazin, 50 mol-% 2,4-Di(5-hydroxy-3-oxa-pentylamino)-1,3,5-triazin und 40 mol-% 2,4,6-Tris-(5-hydroxy-3-oxa-pentylamino)-1,3,5-triazin.

Die Melaminderivate I werden in Mengen von 2 bis 45 Gew.-%, vorzugsweise 7 bis 30 Gew.-%, besonders bevorzugt 10 bis 25 Gew.-%, bezogen auf die Gesamtmenge an eingesetztem Melamin und Formaldehyd, eingesetzt.

Die Melaminderivate I können in fester Form oder wäßriger Lösung zugegeben werden. Die Zugabe erfolgt vorzugsweise zu Beginn der Kondensationsreaktion. Man kann die Melaminderivate I aber auch während der Kondensation des Harzes oder nachträglich zugeben.

Die Herstellung der wäßrigen Kondensationsharze erfolgt unter an sich bekannten Bedingungen durch Kondensation im basischen Milieu bei pH-Werten von 8 bis 10 und Temperaturen von 80 bis 100°C. Der Reaktionsdruck ist in der Regel unkritisch. Man arbeitet im allgemeinen bei Normaldruck.

Als Lösungsmittel verwendet man üblicherweise Wasser. Im Fall, daß man Formaldehyd als wäßrige Lösung einsetzt, ist eine Zugabe weiteren Lösungsmittels nicht unbedingt erforderlich. In der Regel liegt die Menge des verwendeten Lösungsmittels im Bereich von 1 bis 20, bevorzugt 5 bis 10 Gew.-%, bezogen auf die Gesamtmenge an eingesetztem Melamin und Formaldehyd.

Den Endpunkt der Kondensationsreaktion bestimmt man üblicherweise über die Trübungstemperatur. Hierzu wird 1 g des Reaktionsgemisches mit der fünffachen Menge an Wasser versetzt und die Temperatur gemessen, bei der eine bleibende Trübung dieser Mischung auftritt. Üblicherweise kondensiert man bis zu Trübungstemperaturen von 40 bis 60°C.

Man kann auch Mischkondensate mit Harnstoff verwenden, bei denen bis zu 10 Gew.-% des Melamins durch Harnstoff ersetzt wird. Die Herstellung solcher Mischkondensate ist bekannt. Sie erfolgt üblicherweise bei pH-Werten von 8 bis 10 und Temperaturen im Bereich von 70 bis 105°C.

Die so erhaltenen wäßrigen Kondensationsharze weisen im allgemeinen Feststoffgehalte von 40 bis 70 Gew.-% auf. Als Feststoffgehalt wird hier der Trockenrückstand bezeichnet, der ermittelt wird, indem 1 g wäßriges Harz zwei Stunden im Trockenschrank bei 120°C getrocknet wird.

Die Viskositäten der wäßrigen Harze liegen im Bereich von 20 bis 300, vorzugsweise 30 bis 200 mPa·s (20°C).

Nach dem erfindungsgemäßen Verfahren werden Papiere, wie sie für die Herstellung von Schichtpreßstoffen geeignet sind, mit den oben geschilderten wäßrigen Kondensationsharzen imprägniert. Dabei kommen die wäßrigen Tränkharze als Imprägnierflotte zur Anwendung.

Zur Anwendung als Imprägnierflotte werden den wässrigen Tränkharzen wie allgemein üblich Härter zugesetzt. Als Härter kommen dabei beispielsweise Maleinsäure, Maleinsäureanhydrid, Ameisensäure, Ammoniumsulfat, Ammoniumsulfit, Ammoniumnitrat, Ethanolaminhydrochlorid, Dimethylethanolammoniumsulfit sowie Härterkombinationen wie Morpholin/p-Toluolsulfonsäure, N-Methylethanolamin/SO₂ oder N-Methylethanolamin/Ethanolamin/SO₂ in Betracht.

Die Härter können in Mengen von 0,1 bis 2,5 Gew.-% bezogen auf das wäßrige Tränkharz, zugegeben werden. Dem Fachmann ist bekannt, daß die Härterdosierung den jeweiligen anwendungstechnischen Erfordernissen angepaßt werden kann, wobei die Reaktivität der Tränkharz/Härter-Gemische z.B. über die Messung der Trübungszeiten und Gelierzeiten entsprechend eingestellt werden kann.

Den Imprägnierflotten können zusätzlich Hilfsmittel wie Netzmittel zugesetzt werden. Als Netzmittel eignen sich zum Beispiel ethoxylierte Fettalkohole oder Alkylphenolethoxylate, die in Mengen von 0.2 bis 0.6 Gew.-%, bezogen auf die Harzlösung, zugesetzt werden können.

Die Imprägnierung erfolgt so, daß Dekor- und Kernlagenpapiere mit den erfindungsgemäßen Tränkharzlösungen bzw. den Imprägnierflotten durchtränkt werden. Hierzu eignen sich die üblichen Imprägnieranlagen, welche im sogenannten Ein- bzw. Zweistufenverfahren die gewünschte Harzmenge auf und in die Papiere bringen.

Die erfindungsgemäßen imprägnierten Papiere können zur Herstellung von Schichtpreßstoffen eingesetzt werden, beispielsweise zur Herstellung von Hochdruck-Laminaten (HPL), von kontinuierlich hergestellten Laminaten (CPL = Continuous Pressed Laminate) oder für Kurztaktfilme.

Die mit den erfindungsgemäßen imprägnierten Papieren hergestellten Schichtpreßstoffe weisen sehr gute Eigenschaften bezüglich der Nachverformbarkeit, Rißbeständigkeit und Wasserdampfbeständigkeit auf.

Bei der Herstellung der CP-Laminate werden zunächst für diesen Zweck Dekorpapiere und Kernlagenpapiere (Natronkraftpapiere) mit den erfindungsgemäßen Tränkharzen imprägniert.

Als Dekorpapiere werden üblicherweise Papiere mit Flächengewichten im Bereich von 60 bis 150 g/m² verwendet. Der Harzauftrag bei der Dekorpapierimprägierung beträgt ca. 100 bis 150 Gew.-%, bezogen auf das Papiergewicht. Der Restfeuchte-Gehalt wurde auf ca. 6-7 % eingestellt.

Als Kernlagenpapiere werden Natronkraftpapiere mit Flächengewichten im Bereich von 80 bis 160 g/m2 eingesetzt. Der Harzauftrag beträgt 80 bis 110 Gew.-%, bezogen auf das Papiergewicht. Es wurde ebenfalls ein Restfeuchte-Gehalt von ca. 6-7 % eingestellt.

In speziellen Fällen können auch Papiere mit einem Gewicht von 300 g/m² mit einem Harzauftrag von 30 bis 70 Gew.-%, oder Overlay-Papiere mit einem Gewicht von 20 g/m² und einem Harzauftrag bis zu 300 Gew.-%, bezogen auf das Papiergewicht, imprägniert werden.

Zur Herstellung eines dekorativen CPL-Schichtstoffes werden im allgemeinen zwei bis drei Natronkraftpapiere und ein Dekorpapier unter Drücken in einem Bereich von 20 - 50 bar und Temperaturen von 160 - 190 °C innerhalb von 20 - 60 s verpresst.

Diese Schichtstoffe lassen sich beispielsweise mit UF-Leim oder auch Weißleim auf handelsübliche Spanplatten aufleimen.

Bei der Herstellung der HP-Laminate werden Overlay-, Dekor- und Kernlagenpapiere (Natronkraftpapiere) mit den erfindungsgemäßen Tränkharzen imprägniert.

Overlaypapiere ca. 20 g/m², Harzauftrag ca. 150-300 Gew.-% Dekorpapiere wie oben, Harzauftrag ca. 100-150 Gew.-% Kernpapiere wie oben, Harzauftrag 80-110 Gew.-%.

Zur Herstellung des konventionellen Schichtstoffes werden meist 3 Kernlagenpapiere, 1 Kernlagenpapier und 1 Overlaypapier unter Drücken von 70-100 bar und Temperaturen von 120 bis 160 °C innerhalb von 2 bis 60 min, bei Kurztakt-HPL 30 bis 150 s, verpreßt.

Es ist auch möglich, für die Kernanlagenimprägnierung zusätzlich übliche Phenolharze zu verwenden. Die Preßbedingungen müssen dann den geänderten Bedingungen angepaßt werden.

Die Eigenschaften der Schichtpreßstoffe können mit den im folgenden geschilderten Methoden geprüft werden.

Zur Prüfung der Nachverformbarkeit wird der Prüfkörper in eine Biegebank nach DIN 53 799 eingespannt. Die Biegestelle wird auf 130°C bzw. 140°C aufgeheizt und dann um einen Radius von 6 mm gebogen. Die Nachverformbarkeit wird nach folgenden Kriterien beurteilt:
- Note 1: Einwandfreie Biegung ohne Riß
- Note 2: Gebogen, jedoch kleiner Riß unter 1 cm
- Note 3: Gebogen, jedoch mit Riß über 1 cm
- Note 4: Abgeknickt
- Note 5: Laminat durchgebrochen

Weitere wichtige Kriterien für die Beurteilung der Oberflächeneigenschaft des Laminats sind der Kochtest sowie der Glanzgradabfall nach dem Wasserdampftest.

### Kochtest:

Die Probenkörper wird 2 h lang in kochendem Wasser behandelt. Anschließend wird der Probenkörper 5 min in kaltes Wasser gelegt. Der Probenkörper wird dann herausgenommen, abgetrocknet und auf sichtbare Veränderungen der Oberfläche und des Gefüges untersucht (Blasenbildung etc.).

### Wasserdampftest nach DIN 53 799:

Es wird geprüft, ob nach der Behandlung mit Wasserdampf nach 1 h Veränderungen (Blasen, Glanzverlust) in der Dekoroberfläche aufgetreten sind. Der Glanzverlust wird mit Hilfe des Glanzprüfgerätes bestimmt. Der jeweils erhaltene Wert wird direkt in % Reflexion abgelesen.

### Herstellung der wäßrigen Tränkharze

### Beispiele 1 bis 5

Eine Mischung aus 758 g 40 gew. -%igem wäßrigem Formaldehyd und 358 g Wasser wurde auf 30°C temperiert. Mit 2n wäßriger Natronlauge wurde ein pH-Wert von ca. 9 eingestellt. Sodann erfolgte die Zugabe von 821.6 g Melamin und eines Melaminderivats I. Die Reaktionsmischung wurde anschließend auf 98 bis 100°C erhitzt, wobei der pH-Wert langsam abfiel und ca. 70 min bei pH 8,6 - 8,8 gerührt. Sobald eine Probe des Reaktionsgemisches eine Trübungstemperatur von ca. 50°C aufwies, wurde die klare Reaktionslösung sofort auf Raumtemperatur abgekühlt. Der pH-Wert wurde erforderlichenfalls mit 2n wäßriger Natronlauge auf ca. 10 eingestellt.

In den Beispielen 1,2 und 5 wurde als Melaminderivat I 2,4,6-Tris(5-hydroxy-3-oxapentylamino)-1,3,5-triazin verwendet.

In den Beispielen 3 und 4 wurde eine 80 gew.-%ige wäßrige Lösung eines Gemisches aus 10 mol-% 2-(5-Hydroxy-3-oxapentylamino)-1,3,5-Triazin, 50 mol-%, 2,4-Di-(5-hydroxy-3-oxapentylamino)-1,3,5-triazin und 40 mol-% 2,4,6-Tris-(5-hydroxy-3-oxapentylamino)-1,3,5-triazin eingesetzt.

Die jeweiligen Mengen an Melaminderivat I sowie die Eigenschaften der so erhaltenen Tränkharze sind in Tabelle I aufgelistet.

**Tabelle I**

| Beispiel Nr. | 1 | 2 | 3 | 4 | 5 |
|---|---|---|---|---|---|
| Melaminderivat I [g] | 194 | 290 | 363,6 | 242,5 | 97 |
| Feststoffgehalt [Gew.-%] | 60 | 62 | 60,7 | 59,3 | 57,7 |
| Viskosität (20°C) [mPa·s] | 140 | 180 | 120 | 100 | 95 |

Mit den Harzen gemäß den Beispielen 1 und 2 wurden Imprägnierflotten für die CP-Laminatherstellung angesetzt.

Zur Herstellung der Imprägnierflotten wurden die Harz lösungen gemäß den Beispielen 1 + 2 auf einen Feststoffgehalt von ca. 50 Gew.-% eingestellt und anschließend mit soviel einer 85 gew.-%igen wäßrigen Lösung des Härters Dimethylethanolammoniumsulfit versetzt (0.2 - 0.8 Gew.-%, bezogen auf die Harzlösung), daß die Harzflotte eine Trübungszeit von ca. 6,5 min aufweist. Außerdem versetzt man die Harzlösung mit 0,3 Gew.-%, bezogen auf das wäßrige Harz, eines handelsüblichen Alkylphenolethoxylat-Netzmittels.

Zur Herstellung der Laminate wurden zwei Natronkraftpapiere mit einem Flächengewicht von 135 g/m² und ein bedrucktes Dekorpapier (Eiche-Muster) mit einem Flächengewicht von 80 g/m² verwendet. Der Harzauftrag bei der Natronkraftpapier-Imprägnierung betrug ca. 100 %, bei der Dekorpapier-Imprägnierung ca. 120 %, bezogen jeweils auf das Papiergewicht. In beiden Fällen wurde ein Restfeuchte-Gehalt von ca. 6,5 % eingestellt, indem das Papier bei 140°C getrocknet wurde.

Die Papiere wurden dann bei 165°C und einem Druck von 50 bar innerhalb von 30 s zum Schichtstoff verpreßt.

**Tabelle II**

| Prüfung auf Nachverformbarkeit nach DIN 53 799 (Maße der Probe 165 x 90 mm) | | | | |
|---|---|---|---|---|
| | Laminat mit Harz nach Beispiel Nr. | | | |
| | 1 | 2 | 3 | 4 |
| Biegeradius (mm) | 6 | 6 | 6 | 6 |
| Note | 1 | 1 | 2 | 1 |
| Kochtest | keine Blasen | | keine Blasen | |
| Glanzgrad vor | 15 | 19 | 16 | 18 |
| nach Wasserdampftest | 16 | 25 | 18 | 24 |

Mit den Harzen gemäß den Beispielen 2,3 und 4 wurden Imprägnierflotten für die HP-Laminat-Herstellung angesetzt.

Zur Imprägnierung der Kernlagenpapiere wurden die Harz lösungen auf einen Feststoffgeahlt von ca. 50 Gew.-% eingestellt und anschließend mit soviel einer 85 gew.-%igen Lösung des Härters Dimethylethanolammoniumsulfit versetzt (0,1-0,4 Gew.-%), daß die Harzflotte eine Trübungszeit von ca. 12-14 min aufweist. Außerdem versetzt man die Harzlösung mit 0,3 Gew.-%, bezogen auf die Harzlösung, eines handelsüblichen Alkylphenolethoxylat-Netzmittels.

Zur Imprägnierung der Decklagenpapiere (incl. Overlay) wurden die Harzlösungen ebenfalls auf eine Feststoffgehalt von ca. 50 Gew.-% eingestellt. Die Härtermenge wird so gewählt, daß eine Trübungszeit von 3-7 min resultiert. Harzauftrag: 60-150 Gew.-%.

Der Restfeuchtegehalt wurde auf ca. 6-8 % eingestellt, indem das Papier bei ca. 140°C getrocknet wurde.

3 Kernlagenpapiere (135 g/m²), 1 Decklagenpapier (80 g/m²) und 1 Overlaypapier (20 g/m²) (Doppelaufbau mit 2 Trennbögen) werden bei 100 bar und 136°C innerhalb von 2 min zum Laminat verpreßt.

| | Laminat mit Harz nach Beispiel Nr. | | |
|---|---|---|---|
| | 2 | 3 | 4 |
| Biegeradius (mm) | 6 | 6 | 6 |
| Note | 1 | 1 | 1 |
| Kochtest | keine Blasenbildung | | |

Herstellung der Imprägnierflotten für die Herstellung von Filmen für die Kurztaktbeschichtung:

Zur Herstellung der Imprägnierflotte wurde das Harz gemäß Beispiel 5 mit Wasser auf einen Feststoffgehalt von 55 Gew.-% eingestellt und mit 0,3 Gew.-%, bezogen auf die Harzlösung, eines handelsüblichen Alkylphenolethoxylat-Netzmittels versetzt. Mit einer 85 gew.-%igen wäßrigen Lösung eines Härters (Dimethylethanolammoniumsulfit) wurde eine Trübungszeit von ca. 5 min eingestellt.

Es wurden Dekorpapiere mit einem Flächengewicht von 80 g/m² imprägniert. Der Harzauftrag betrug ca. 120 %, der Restfeuchte-Gehalt wurde auf etwa 6,5 % eingestellt. Die so hergestellten Dekorfilme wurden nach dem Kurztaktverfahren mit 20 bar bei 190°C innerhalb von 35 s auf übliche beschichtungsfähige Spanplatten verpreßt.

Zur Prüfung auf Rißempfindlichkeit wurden die Papierfilme mit 20 bar bei 170°C und einer Preßzeit von 6 min auf Spanplatten aufgepreßt.

**Tabelle IV**

| Oberflächenbeurteilung der Beschichtung mit einem mit dem Harz gemäß Beispiel Nr. 5 hergestellten Film | |
|---|---|
| Härtung: | 0,5 |
| Geschlossenheit | 2 |
| Glanz > 20°C: | 39 |
| Risse | keine |

## Patentansprüche

1. Verfahren zur Herstellung von imprägnierten Papieren, wie sie für die Oberflächenbeschichtung eingesetzt werden, durch Tränken der Papiere mit einem wäßrigen Harz auf Basis von Melanin-Formaldehyd-Kondensaten, dadurch gekennzeichnet, daß man die Papiere mit einem wäßrigen Melamin-Formaldehyd-Kondensationsharz, enthaltend 2 bis 45 Gew.-% eines Melaminderivats der allgemeinen Formel I, bezogen auf die Gesamtmenge an eingesetztem Melamin und Formaldehyd, 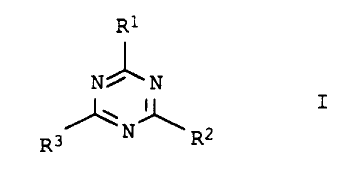 in der R¹, R² und R³ für -NH₂ oder NHR⁴ stehen und R¹, R² und R³ nicht gleichzeitig -NH₂ sind, und R⁴ für Hydroxy-C₂-C₄-alkyl-(oxa-C₂-C₄-alkyl)ₙ -mit n = 1 bis 5 steht, oder Mischungen von Melaminderivaten I, imprägniert.

2. Verfahren nach Anspruch 1, dadurch gekennzeichnet, daß das wäßrige Kondensationsharz als Melaminderivat I ein 2,4,6-Tris(5-hydroxy-3-oxa-pentylamino)-1, 3, 5-triazin enthält.

3. Verfahren nach Anspruch 1, dadurch gekennzeichnet, daß das wäßrige Kondensationsharz als Melaminderivat I ein Gemisch aus 10 mol-% 2-(5-Hydroxy-3-oxa-pentylamino)-1,3,5-triazin, 50 mol-%, 2.4-Di-(5-hydroxy-3-oxa-pentylamino)-1,3,5-triazin und 40 mol-% 2,4,6-Tris-(5-hydroxy-3-oxa-pentylamino)-1,3,5-triazin enthält.

4. Imprägnierte Papiere, erhältlich nach dem Verfahren gemäß einem der Ansprüche 1 bis 3.

5. Verfahren zur Herstellung von Laminaten, dadurch gekennzeichnet, daß mehrere Lagen imprägnierter Papierbahnen gemäß Anspruch 4 bei Drücken zwischen 20 und 100 bar und Temperaturen zwischen 120 und 190°C miteinander verpreßt werden.

## Claims

1. A process for preparing impregnated papers of the type used for surface coating by saturating the papers with an aqueous resin based on melamine-formaldehyde condensates, characterized in that the papers are impregnated with an aqueous melamine-formaldehyde condensation resin containing 2 to 45% by weight of a melamine derivative of the general formula I, based on the total amount of melamine and formaldehyde used, 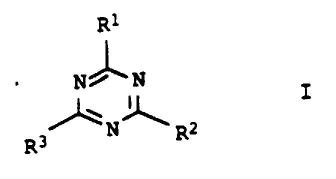 where R¹, R² and R³ are each -NH₂ or NHR⁴ and R¹, R² and R³ are not all -NH₂ at one and the same time, and R⁴ is hydroxy-C₂-C₄-alkyl-(oxa-C₂-C₄-alkyl)ₙ, where n = 1 to 5, or mixtures of melamine derivatives I.

2. A process as claimed in claim 1, characterized in that the aqueous condensation resin used as melamine derivative I contains a 2,4,6-tris(5-hydroxy-3-oxapentylamino)-1,3,5-triazine.

3. A process as claimed in claim 1, characterized in that the aqueous condensation resin used as melamine derivative I contains a mixture of 10 mol% of 2-(hydroxy-3-oxapentylamino)-1,3,5-triazine, 50 mol% of 2,4-di(5-hydroxy-3-oxapentylamino)-1,3,5-triazine and 40 mol% of 2,4,6-tris(5-hydroxy-3-oxapenty1amino)-1,3,5-triazine.

4. Impregnated papers obtainable by the process of any one of claims 1 to 3.

5. A process for preparing laminates, characterized in that a plurality of plies of impregnated paper webs as claimed in claim 4 are pressed together at pressures between 20 and 100 bar and temperatures between 120 and 190°C.

## Revendications

1. Procédé de fabrication de papiers imprégnés, comme on les utilise pour le revêtement de surfaces, par l'imprégnation des papiers avec une résine aqueuse à base de produits de condensation de mélamine-formaldéhyde, caractérisé en ce que l'on imprègne les papiers avec une résine de condensation de mélamine-formaldéhyde aqueuse, contenant 2 à 45% en poids d'un dérivé de la mélamine de la formule générale I, par rapport à la quantité totale de mélamine mise en oeuvre et du formaldéhyde, 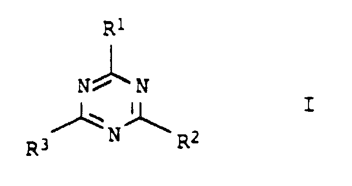 dans laquelle R¹, R² et R³ représentent -NH₂ ou NHR⁴ et R¹, R² et R³ ne sont pas simultanément -NH₂ et R⁴ représente un radical hydroxyalkyl (C₂-C₄)-(oxaalkylC₂-C₄)ₙ, où n a une valeur qui varie de 1 à 5, ou des mélanges de dérivés de mélamine I.

2. Procédé suivant la revendication 1, caractérisé en ce que la résine de condensation aqueuse contient, à titre de dérivé de mélamine I, une 2,4,6-tris(5-hydroxy-3-oxapentylamino)-1,3,5-triazine.

3. Procédé suivant la revendication 1, caractérisé en ce que la résine de condensation aqueuse contient, à titre de dérivé de mélamine I, un mélange de 10% molaires de 2-(5-hydroxy-3-oxapentylamino)-1,3,5-triazine, de 50% molaires de 2,4-di-(5-hydroxy-3-oxapentylamino)-1,3,5-triazine et de 40% molaires de 2,4,6-tris-(5-hydroxy-3-oxapentylamino)-1,3,5-triazine.

4. Papier imprégnés, que l'on peut obtenir par mise en oeuvre du procédé suivant l'une quelconque des revendications 1 à 3.

5. Procédé de fabrication de stratifiés ou lamifiés, caractérisé en ce que l'on comprime mutuellement plusieurs couches de nappes ou feuilles de papier imprégnées suivant la revendication 4 sous des pressions de 20 à 100 bars et à des températures comprises entre 120 et 190°C.
